# EUROPEAN PATENT SPECIFICATION

(11) **EP 3 971 230 B1**
(45) Date of publication and mention of the grant of the patent: **17.06.2026**
(21) Application number: 20382818.1
(22) Date of filing: 16.09.2020
(51) Int. Cl.: C08H 7/00, C07G 1/00, C08L 97/00, C08J 3/09

(54) **DEEP EUTECTIC SOLVENTS, USES THEREOF, AND METHOD FOR PREPARING A LIGNIN PREPOLYMER BASED ON THE DEEP EUTECTIC SOLVENTS**
TIEFE EUTEKTISCHE LÖSUNGSMITTEL, VERWENDUNGEN DAVON UND VERFAHREN ZUR HERSTELLUNG EINES LIGNINPRÄPOLYMERS AUF BASIS EINES TIEFEN EUTEKTISCHEN LÖSUNGSMITTELS
SOLVANTS EUTECTIQUES PROFONDS, SES UTILISATIONS ET PROCÉDÉ DE PRÉPARATION D'UN PRÉPOLYMÈRE DE LIGNINE SUR LA BASE DES SOLVANTS EUTECTIQUES PROFONDS

(43) Date of publication of application: 23.03.2022
(73) Proprietor: Fundación Tecnalia Research & Innovation, 48160 Derio (Bizkaia) (ES)
(72) Inventor: Svensson, Ingemar, 48160 ERIO (BIZKAIA) (ES); Barrio Ulanga, Aitor, 48160 ERIO (BIZKAIA) (ES)
(74) Representative: Balder IP Law, S.L.

(56) References cited:
- BENVENUTTI LAÍS ET AL: "NADES as potential solvents for anthocyanin and pectin extraction from Myrciaria cauliflora fruit by-product: In silico and experimental approaches for solvent selection", JOURNAL OF MOLECULAR LIQUIDS, ELSEVIER, AMSTERDAM, NL, vol. 315, 8 July 2020 (2020-07-08), XP086266025, ISSN: 0167-7322, [retrieved on 20200708], DOI: 10.1016/J.MOLLIQ.2020.113761
- MOUDEN SANAE ET AL: "Towards eco-friendly crop protection: natural deep eutectic solvents and defensive secondary metabolites", PHYTOCHEMISTRY REVIEWS, KLUWER, NL, vol. 16, no. 5, 25 March 2017 (2017-03-25), pages 935 - 951, XP036355215, ISSN: 1568-7767, [retrieved on 20170325], DOI: 10.1007/S11101-017-9502-8
- MALAEKE HASSAN ET AL: "Deep eutectic solvent as an efficient molecular liquid for lignin solubilization and wood delignification", JOURNAL OF MOLECULAR LIQUIDS, vol. 263, 1 August 2018 (2018-08-01), NL, pages 193 - 199, XP055782601, ISSN: 0167-7322, DOI: 10.1016/j.molliq.2018.05.001

## Description

### TECHNICAL FIELD OF THE INVENTION

The present invention relates to a deep eutectic solvent (DES) comprising at least one carboxylic acid which comprises at least two carboxylic acid functional groups and has a number of carbon atoms in the range of from 4 to 10; at least one alcohol which comprises two or three alcohol functional groups, and which is selected from the group consisting of alcohols having a number of carbon atoms in the range of from 2 to 12 carbon atoms, polyethylene glycol and polypropyleneglycol; and water in an amount of from 10 to 50 wt.% of the total weight of the deep eutectic solvent.

It is also related to the uses of these deep eutectic solvents of the invention, in particular, the use of a DES according to the invention as solvent for solubilising lignin from a lignin material, or the use of the DES for preparing a lignin-prepolymer which can be subsequently used in applications such as for producing films, coatings, insulating foams, adhesives, binders, composites or for fibre sizing or for radical curing.

### BACKGROUND OF THE INVENTION

Lignin is a heterogeneous phenolic polymer, and it is the second most abundant biopolymer of plant residues in nature, only behind cellulose. Even though cellulose and lignin can both be found in plants, they have significant differences in terms of structure and chemical behaviour, as the former is a polysaccharide consisting of linear regular chains of 1-(1-4)-linked glucose units, while the latter is an amorphous and randomly branched polymer mainly comprised of phenylpropanoid units (also known as monolignols or lignin monomers) coniferyl alcohol, sinapyl alcohol, and a minor quantity of *p-*coumaryl alcohol. These lignin monomers are cross-linked together via carbon-carbon, ester and ether bonds through many different bonding motifs, such as the β-O-4 linkage, which is the most common motif in soft and hardwood lignin (Studer, M. H.; DeMartini, J. D.; Davis, M. F.; Sykes, R. W.; Davison, B.; Keller, M.; Tuskan, G. A.; Wyman, C. E. PNAS 2011, 108(25), 6300-6305), followed by β-β linkage, β-5 linkage and α-O-4 linkage. Typically, softwoods contain approximately 30% lignin, while hardwoods generally have a lower lignin content *(i.e.* approx. 25%).

Lignin is a most encouraging material due to its unique aromatic backbone, which can be later converted into a vast array of added value chemicals. Due to this fact, in the last decades there has been a growing interest on the part of the fuel and chemical industry, in particular, in the pulp and paper industry, in lignin valorisation. Chemical pulping processes which solubilise lignin from plant cell walls currently represent the main existing source for process-modified lignins, and they are based on alkaline delignification using an alkali (soda pulping) or an alkali and Na₂S (kraft pulping) or, alternatively, they may involve lignin sulfonation (sulfite pulping processes).

Recently, though, polymerization of lignin has begun to gain more research attention than the traditional method of breaking it down. For example, a variety of foams have been developed from lignin, with several interesting applications in goods packaging and foundries' cushioning of utensils and machinery, such as starch-lignin foams, tannin-lignin foams or phenolic resin lignin foams.

To date, lignin extraction and modification is still a challenging process, mainly due to the high stability, structural complexity and very low solubility of lignocellulosic compounds (J. C. Carvajal, A. Gómez, C. A. Cardona - Bioresource Technology 2016, 214, 468-476). Furthermore, depending on the conversion process, even more structural complexity is added to the physical and chemical properties of extracted lignin. All these factors have resulted in a number of barriers which currently hinder large-scale applications of lignin.

Ionic liquids (ILs) currently represent a promising option for lignocellulose processing. They are a class of organic salts that are liquid at ambient temperatures, and some of them have negligible vapor pressure and good thermal stability. A certain degree of solubility of insoluble compounds such as cellulose in ILs has been reported in several scientific publications (H. Zhang, J. Wu, J. Zhang, J. He - Macromolecules 2005, 38, 8272-8277; S. Zhu, Y. Wu, Q. Chen, Z. Yu, C. Wang, S. Jin, Y. Ding, G. Wu - Green Chemistry 2006, 8, 325-327). Lignin extraction using ionic liquids such as imidazolium-based ILs has also been reported several times *(e.g.* Y. Pu, N. Jiang, A. J. Ragauskas Journal of Wood Chemistry and Technology 2007, 27, 23-33), and there is also a number of publications related to lignin depolymerization using ILs (E. Reicher, R. Wintriger, D. A. Volmer, R. Hempelmann Phys. Chem. Chem. Phys. 2012, 14, 5214-5221; A. George, K. Tran, T. J. Morgan, P. I. Benke, C. Berrueco, E. Lorente, B. C. Wu, J. D. Keasling, B. A. Simmons, B. M. Holmes Green Chemistry 2011, 13, 3375-3385). However, further processing of products obtained by lignin polymerization to provide other value-added chemicals using ILs has often proven difficult.

Several macromolecules can reportedly be obtained from lignin, such as carbon fibres, activated carbon, polymer alloys, polyelectrolytes, substituted lignins, wood preservatives, adhesives and resins. They can be extracted directly from lignin, but most of them require surface modification, by which functional groups on side chains are changed while preserving the aromatic backbone of lignin. Examples from such modifications using ILs are known in the art.

By way of illustration, J. Wen *et al.* (J. Wen, Y. Sun, L. Meng, T. Yuan, F. Xu, R. Sun Industrial Crops and Products 2011, 34, 1491-1501) disclose the lauroylation of ball-milled bamboo in ionic liquids. The ball-milled bamboo was dissolved in an IL to enable separation of cellulose, lignin and hemicellulose and, after complete dissolution, triethylamine and lauroyl chloride were added to carry out esterification. Xie *et al.* (H. Xie, A. King, I. Kilpeläinen, M. Granström, D. S. Argyropoulos Biomacromolecules 2007, 8, 3740-3748) discloses acetylation, benzoylation and carbonylation on thermomechanical pulp fibres using pyridine instead of triethylamine as neutralizer of the hydrochloric acid generated during the esterification process.

However, ionic liquids entail a number of disadvantages when used at industrial scale. They are generally expensive, and several of them are toxic and non-biodegradable. Besides, their synthesis is typically not environmentally friendly. In addition to this, as illustrated above, these lignin modification processes usually involve the use of toxic compounds, such as triethylamine or pyridine, wherein the former is known to potentially affect lungs and kidneys, while the latter is known to be a highly carcinogenic substance.

Deep eutectic solvents emerged in the last two decades as a new generation of solvents potentially capable of overcoming the problems associated to ionic liquids. A deep eutectic solvent (DES) is a mixture of compounds having a much lower melting point than either of the individual components when mixed in a certain ratio, mainly due to the generation of intermolecular hydrogen bonds. Specifically, there is at least one compound working as hydrogen bond donor and at least another one working as hydrogen bond acceptor, usually resulting in a liquid mixture at room temperature. Deep eutectic solvents which are liquid at or below room temperature can also be referred to as room temperature ionic liquids or RTIL.

DESs usually have negligible volatility, are non-flammable, and may even be of natural origin, such as the known natural deep eutectic solvents or NADES. They may share some properties with ionic liquids, but are easier to prepare with high purity at low price. Besides, DESs are usually considered green solvents due to their typical biodegradability and biocompatibility. Another relevant difference between an IL and a DES is that the latter is water-tolerant, whereas the former is not. Thus, deep eutectic solvents may prove more useful than ionic liquids for chemical reactions involving, for example, biomass, since they do not typically require any previous purification of the reagents to conduct the reaction.

However, sometimes pure deep eutectic solvents may have an excessive viscosity which hinders their potential applications. Also, in certain cases, due to their higher melting points compared to ILs, their application as green solvents at room temperature may be hampered.

Furthermore, the very low solubility of lignin and, in particular, its solubility in deep eutectic solvents, has been the object of several research works. By way of illustration, Soares *et al.* (B. Soares, D. J. P. Tavares, J. L. Amaral, A. J. D. Silvestre, C. S. R. Freire, J. A. P. Coutinho *ACS Sustainable Chemistry and Engineering* **2017,** *5*, 4056-4065) disclose the effect of water as hydrotrope, which can improve the solubility of kraft lignin in a DES system composed of propionic acid and urea, when used in a certain amount.

In other DES systems based on sugar-choline chloride combinations, such as glucose-choline chloride (GCH) described by Dai *et al.* (Y. Dai, J. van Spronsen, G.-J. Witkamp, R. Verpoorte, Y. H. Choi Analytica Chimica Acta 2013, 766, 61-68), the addition of small amounts of water (5-10%) was found to reduce the viscosity to improve the impregnation in wood chips. However, higher amounts of water reportedly resulted in the loss of existing hydrogen bonds, and consequently, the disappearance of the DES structure. For example, addition of 50% (v/v) water to a lactic acid-glucose DES provoked a dramatic change in DES structure, very likely due to the rupture of hydrogen bonds.

So far the highest reported rate of dissolved lignin in a DES is about 50% w/w, using a resorcinol:choline chloride deep eutectic solvent system in the absence of water, in a wood pulp delignification process (H. Malaeke, M. R. Housaindokht, H. Monhemi, M. Izadyar Journal of Molecular Liquids 2018, 263, 193-199). However, such high dissolution rate was only possible through the use of ultrasound irradiation which improved mass transfer. Besides, choline chloride, which is a typical component of deep eutectic solvents, is particularly expensive and thus undesirable for use in large-scale processes.

All these complications have created many obstacles in large-scale applications of lignin. Besides, the above findings about deep eutectic solvents and their applications in lignin-based materials are relatively recent, so a myriad of new applications still remain unexplored, including, for example, lignin derivatization processes.

Hence, a new deep-eutectic solvent providing a more efficient lignin solubilisation without requiring the use of toxic solvents or ultrasound irradiation, is needed. There is also a need in the art for more biodegradable solvents and, in particular, for DESs at more affordable prices. Furthermore, a new deep-eutectic solvent providing all the above mentioned advantages, which can even be directly used as active agent in an efficient lignin valorisation process, would be highly desirable.

### SUMMARY OF THE INVENTION

According to a first aspect, the invention provides a deep eutectic solvent comprising:
- at least one carboxylic acid which comprises at least two carboxylic acid functional groups and has a number of carbon atoms in the range of from 4 to 10;
- at least one alcohol which comprises two or three alcohol functional groups, and which is selected from the group consisting of
   (i) alcohols having a number of carbon atoms in the range of from 2 to 12 carbon atoms,
   (ii) polyethylene glycol and
   (iii) polypropylene glycol; and
- water in an amount of from 10 to 50 wt.% of the total weight of the deep eutectic solvent.

The deep eutectic solvents of the invention advantageously provide a non-toxic alternative to known organic solvents. They can be highly biodegradable, and can be used for efficiently dissolving lignin and copolymerising it to form lignin prepolymers or oligomers and, subsequently, even fully polymerized polyester products of high value.

According to a second aspect, the invention provides the use of a deep eutectic solvent according to the first aspect of the invention as solvent for solubilising lignin.

According to a third aspect, the invention provides the use of a deep eutectic solvent according to the first aspect of the invention for preparing a lignin prepolymer. In one embodiment of this third aspect, the invention provides the use of a deep eutectic solvent according to the first aspect of the invention for preparing a lignin prepolymer, wherein said use further comprises solubilising lignin.

With the deep eutectic solvents of the invention, it is possible to produce biobased oligoesters, or biobased polyesters once the oligoesters are subsequently cured, which provide a clear advantage from the point of view of sustainability, especially when used at high scale in industrial processes.

According to a fourth aspect, the invention provides a process for preparing a lignin prepolymer, comprising:
a) contacting a lignin material with a deep eutectic solvent according to the first aspect of the invention;
b) heating said mixture to a temperature in the range of from about 80°C to about 160°C to produce a lignin prepolymer.

According to a fifth aspect, the invention provides a lignin prepolymer obtainable or obtained by the process according to the fourth aspect of the invention.

According to a sixth aspect, the invention provides the use of a lignin prepolymer obtainable by the process according to the fourth aspect of the invention for producing films, coatings, insulating foams, adhesives, binders, composites or for fibre sizing or for radical curing.

Also described is a process for the preparation of a polymer, wherein a lignin prepolymer obtained according to the process defined according to a fourth aspect of the invention is polymerized.

### BRIEF DESCRIPTION OF THE DRAWINGS

- **FIG. 1:**: ATR-FTIR spectra of 23BDOM30 (upper spectrum) and 14BDOM30 (lower spectrum) deep eutectic solvents prepared according to the process of the invention (1:1 A/CA ratio).
- **FIG. 2:**: ATR-FTIR spectra of 23BDOC30 (upper spectrum) and 14BDOC30 (lower spectrum) deep eutectic solvents prepared according to the process of the invention (1:1 A/CA ratio).
- **FIG. 3:**: ATR-FTIR spectrum of a lignin prepolymer (Sample 1) prepared according to the process of the invention, specifically as described in Example 3 of the present application (2-hr heating).
- **FIG. 4:**: ATR-FTIR spectrum of a lignin prepolymer (Sample 2) prepared according to the process of the invention, specifically as described in Example 3 of the present application (4-hr heating).
- **FIG. 5:**: ATR-FTIR spectrum of a lignin prepolymer prepared according to the process of the invention, specifically as described in Example 4 of the present application.
- **FIG. 6:**: GPC chromatogram of lignin starting material (BioPiva^{™} 199 kraft lignin), recorded as indicated in Example 4 of the present application.

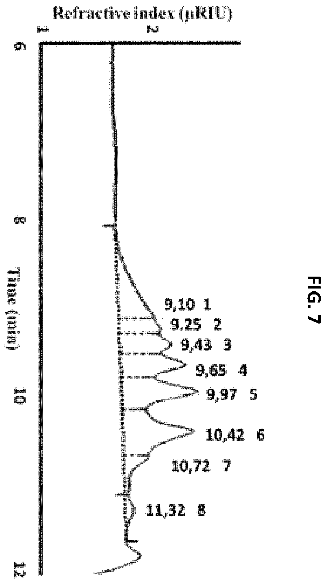

- **FIG. 7:**: GPC chromatogram of lignin pre-polymer prepared according to Example 4, recorded as indicated in Example 4 of the present application.

### DETAILED DESCRIPTION OF THE INVENTION

According to a first aspect, the invention provides a deep eutectic solvent comprising:
- at least one carboxylic acid which comprises at least two carboxylic acid functional groups and has a number of carbon atoms in the range of from 4 to 10;
- at least one alcohol which comprises two or three alcohol functional groups, and which is selected from the group consisting of
   (i) alcohols having a number of carbon atoms in the range of from 2 to 12 carbon atoms,
   (ii) polyethylene glycol, and
   (iii) polypropylene glycol; and
- water in an amount of from 10 to 50 wt.% of the total weight of the deep eutectic solvent.

The at least one carboxylic acid comprised by the deep eutectic solvents of the invention has a number of carbon atoms in the range of from 4 to 10, wherein said number of carbon atoms can also preferably be in the range of from 4 to 7, or more preferably in the range of from 4 to 6.

The carboxylic acid comprised by the deep eutectic solvents of the invention can be a saturated or unsaturated carboxylic acid or, more particularly, a saturated or unsaturated, aliphatic or cyclic carboxylic acid. Preferably, the carboxylic acid is a saturated or unsaturated aliphatic carboxylic acid or an unsaturated cyclic carboxylic acid. More preferably, the carboxylic acid is a saturated or unsaturated aliphatic carboxylic acid.

In addition to the carboxylic acid functional groups, the at least one carboxylic acid may optionally further comprise at least one nitrogen-based or oxygen-based additional functional group other than a carboxylic acid or alcohol functional group. Preferably, the at least one carboxylic acid may optionally further comprise at least one nitrogen-based or oxygen-based additional functional group which is an ether or amine functional group, and more preferably, an ether group.

According to one embodiment, the at least one carboxylic acid may preferably comprise two or three carboxylic acid functional groups, or consist of two or three carboxylic acid functional groups (*i.e.* a dicarboxylic acid or tricarboxylic acid, respectively), or consist of two carboxylic acid functional groups. Also, the at least one carboxylic acid may optionally be an unsaturated carboxylic acid.

In another embodiment, the at least one carboxylic acid comprised by the deep eutectic solvents of the invention has from 4 to 7 carbon atoms, or from 4 to 6 carbon atoms, and comprises two or three carboxylic acid functional groups. In a particular embodiment, the at least one carboxylic acid of the deep eutectic solvents of the invention has from 4 to 7 carbon atoms, or from 4 to 6 carbon atoms, comprises two or three carboxylic acid functional groups, and is a saturated or unsaturated aliphatic carboxylic acid or an unsaturated cyclic carboxylic acid. In still another particular embodiment, the at least one carboxylic acid of the deep eutectic solvents of the invention has from 4 to 7 carbon atoms, or from 4 to 6 carbon atoms, comprises two or three carboxylic acid functional groups, and is a saturated or unsaturated aliphatic carboxylic acid.

According to another embodiment, the at least one carboxylic acid comprised by the deep eutectic solvents of the invention has from 4 to 7 carbon atoms, or from 4 to 6 carbon atoms, comprises two or three carboxylic acid functional groups, and is (a) a saturated or unsaturated aliphatic carboxylic acid, or (b) an unsaturated cyclic carboxylic acid, wherein any of the carboxylic acids (a) or (b) may optionally further comprise at least one nitrogen-based or oxygen-based additional functional group which is an ether or amine functional group. In another embodiment, the at least one carboxylic acid has from 4 to 6 carbon atoms, comprises two or three carboxylic acid functional groups, and is (a) a saturated or unsaturated aliphatic carboxylic acid, or (b) an unsaturated cyclic carboxylic acid further comprising at least one nitrogen-based or oxygen-based additional functional group which is an ether or amine functional group. Also, according to a particular embodiment, the at least one carboxylic acid has from 4 to 6 carbon atoms, comprises two or three carboxylic acid functional groups, and is an unsaturated aliphatic or cyclic carboxylic acid, optionally further comprising at least one nitrogen-based or oxygen-based additional functional group which is an ether or amine functional group.

In another embodiment, the at least one carboxylic acid has from 4 to 6 carbon atoms, comprises two or three carboxylic acid functional groups, and is an unsaturated aliphatic or cyclic carboxylic acid, optionally further comprising at least one ether functional group.

In still another embodiment, the at least one carboxylic acid has from 4 to 6 carbon atoms, comprises two or three carboxylic acid functional groups, and is an unsaturated cyclic carboxylic acid which further comprises at least one ether or amine functional group. In still another preferred embodiment, the at least one carboxylic acid has from 4 to 6 carbon atoms, comprises two or three carboxylic acid functional groups, and is an unsaturated cyclic carboxylic acid which further comprises at least one ether functional group.

According to a preferred embodiment, the at least one carboxylic acid comprised by the deep eutectic solvents of the invention is selected from the group consisting of succinic acid, maleic acid, fumaric acid, glutaric acid, adipic acid, citric acid, aconitic acid, dehydromucic acid, pimelic acid, azelaic acid and sebacic acid. More preferably, the at least one carboxylic acid is selected from the group consisting of succinic acid, maleic acid, fumaric acid, glutaric acid, adipic acid, citric acid, aconitic acid, dehydromucic acid and pimelic acid. Still more preferably, the at least one carboxylic acid is selected from the group consisting of succinic acid, maleic acid, fumaric acid, glutaric acid, adipic acid, citric acid, aconitic acid and dehydromucic acid. Even more preferably, the at least one carboxylic acid is selected from the group consisting of succinic acid, maleic acid, fumaric acid, glutaric acid, adipic acid, citric acid and aconitic acid. Still even more preferably, the at least one carboxylic acid is selected from the group consisting of succinic acid, maleic acid, fumaric acid, citric acid and aconitic acid. In another particular embodiment, the at least one carboxylic acid can be selected from the group consisting of maleic acid, fumaric acid, citric acid and aconitic acid; more preferably, the at least one carboxylic acid can be selected from the group consisting of maleic acid, fumaric acid and citric acid. Still more preferably, the at least one carboxylic acid can be maleic acid or fumaric acid.

In a preferred embodiment, the at least one carboxylic acid comprised by the deep eutectic solvent of the invention is biobased. In particular, the at least one carboxylic acid comprised by the deep eutectic solvent of the invention can be biobased, that is, it may have a biobased carboxylic acid content which is higher than 25 wt.%. The at least one carboxylic acid can advantageously have a biobased carboxylic acid content which is higher than 50 wt.%, higher than 60 wt.%, higher than 70 wt.% or even 100 wt.%. When there is a single carboxylic acid, the amount of biobased carboxylic acid content in weight percentage is to be understood as the biobased content by weight in respect the total amount of the carboxylic acid found in the deep eutectic solvent.

The term "biobased" in the context of the present invention means a composition and/or compound(s) that is/are derived, produced or synthesized in part or in whole from a renewable source such as a plant or animal source. By way of illustration, biobased succinic acid may be obtained from corn stalk via fermentation *(e.g.* Hodge et al. Enzyme Microb. Technol. 2009, 44, 309-316). Biobased fumaric acid may also be produced through fermentation of molds belonging to the genus *Rhizopus (e.g.* J.W. Foster and S.A. Waksman J. Am. Chem. Soc. 1939, 61(1), 127-135). Biobased maleic acid may also be produced by isomerization from biobased malic acid, for example, by fermentation of *Aspergillus* (e.g. US patent 3,063,910 (1962); C. Knuf et al. Appl. Environ. Microbiol. 2013, 79, 6050-6058).

According to another embodiment, the deep eutectic solvent of the invention may comprise at least two carboxylic acids, wherein each one of them comprises at least two carboxylic acid functional groups and has a number of carbon atoms in the range of from 4 to 10. According to a preferred embodiment, these at least two carboxylic acids can be independently defined further according to any of the above embodiments or any combination thereof.

In particular, when the deep eutectic solvent of the invention comprises more than one carboxylic acid as defined above, then one, more than one, or all of these carboxylic acids can be biobased; more preferably, one, more than one, or all of these carboxylic acids can be biobased, with a biobased carboxylic acid content which is higher than 25 wt.%, higher than 50 wt.%, higher than 60 wt.%, higher than 70 wt.% or even 100 wt.%. In those cases, wherein there is more than one carboxylic acid, the amount of biobased carboxylic acid content in weight percentage is to be understood as the biobased content by weight in respect the total amount of carboxylic acids found in the deep eutectic solvent.

The at least one alcohol comprised by the deep eutectic solvents of the invention, which comprises two or three alcohol functional groups, is a non-sugar alcohol. It is selected from the group consisting of (i) alcohols having a number of carbon atoms in the range of from 2 to 12 carbon atoms, (ii) polyethylene glycol and (iii) polypropyleneglycol; preferably, it can be selected from the group consisting of (i) alcohols having a number of carbon atoms in the range of from 2 to 10 carbon atoms, (ii) polyethylene glycol and (iii) polypropyleneglycol; more preferably, it can be selected from the group consisting of (i) alcohols having a number of carbon atoms in the range of from 2 to 6 carbon atoms, (ii) polyethylene glycol and (iii) polypropyleneglycol. In another embodiment, the at least one alcohol comprising two or three alcohol functional groups may be an alcohol having a number of carbon atoms in the range of from 2 to 12 carbon atoms, from 2 to 10 carbon atoms, or from 2 to 6 carbon atoms.

According to one embodiment, the at least one alcohol consists of two or three alcohol functional groups (*i.e.* a diol or triol, respectively), or consist of two alcohol functional groups. In a particular embodiment, at least one of the alcohol functional groups comprised by the at least one alcohol is a primary alcohol. In another particular embodiment, the at least one alcohol comprised by the deep eutectic solvents of the invention comprises two or three alcohol functional groups, of which at least a first alcohol functional group is a primary alcohol, and at least a second alcohol functional group is a secondary alcohol.

The at least one alcohol comprised by the deep eutectic solvents of the invention, which comprises two or three alcohol functional groups, is selected from the group consisting of:
(i) alcohols comprising two or three alcohol functional groups, which have a number of carbon atoms in the range of from 2 to 12 carbon atoms, more preferably, a number of carbon atoms in the range of from 2 to 6 carbon atoms, and wherein at least a first alcohol functional group is a primary alcohol, and at least a second alcohol functional group is a secondary alcohol;
(ii) polyethylene glycol; and
(iii) polypropyleneglycol.

The at least one alcohol comprised by the deep eutectic solvents of the invention is preferably selected from the group consisting of ethanediol, propanediol, butanediol, pentanediol, hexanediol, glycerol, triethanolamine, polyethylene glycol and polypropylene glycol.

According to a preferred embodiment, the at least one alcohol comprised by the deep eutectic solvents of the invention is selected from the group consisting of 1,2-ethanediol (1,2-EDO, ethylene glycol or glycol), 1,3-propanediol (1,3-PDO), 1,2,3-propanetriol (glycerol or glycerine), 1,4-butanediol (1,4-BDO), 2,3-butanediol (2,3-BDO), 1,4-pentanediol (1,4-PDO), triethanolamine (TEA), polyethylene glycol (PEG) and polypropylene glycol (PPG). More preferably, the at least one alcohol comprised by the deep eutectic solvents of the invention is selected from the group consisting of 1,2-ethanediol, 1,3-propanediol, 1,2,3-propanetriol, 1,4-butanediol, 2,3-butanediol, 1,4-pentanediol and triethanolamine. Still more preferably, the at least one alcohol comprised by the deep eutectic solvents of the invention is selected from the group consisting of 1,2-ethanediol, 1,3-propanediol, 1,2,3-propanetriol, 1,4-butanediol, 2,3-butanediol and triethanolamine. Still even more preferably, the at least one alcohol comprised by the deep eutectic solvents of the invention is selected from the group consisting of 1,3-propanediol, 1,2,3-propanetriol, 1,4-butanediol, 2,3-butanediol and triethanolamine. In another embodiment, the at least one alcohol comprised by the deep eutectic solvents of the invention is polyethylene glycol or polypropylene glycol. In still another embodiment, the at least one alcohol comprised by the deep eutectic solvents of the invention is selected from the group consisting of 1,3-propanediol, 1,2,3-propanetriol, 1,4-butanediol and 2,3-butanediol; more preferably, the at least one alcohol is 1,4-butanediol or 2,3-butanediol.

In a preferred embodiment, the at least one alcohol comprised by the deep eutectic solvent of the invention is biobased. In particular, the at least one alcohol comprised by the deep eutectic solvent of the invention can be biobased, with a biobased alcohol content which is higher than 25 wt.%. The at least one alcohol can advantageously have a biobased alcohol content which is higher than 50 wt.%, higher than 60 wt.%, higher than 70 wt.% or even 100 wt.%. When there is a single alcohol, the amount of biobased carboxylic acid content in weight percentage is to be understood as the biobased content by weight in respect the total amount of the alcohol found in the deep eutectic solvent.

Examples of biobased alcohols include, for example, biobased 2,3-butanediol which is produced by bacterial or enzymatic conversion of natural carbohydrates such as glucose, or biobased 1,4-butanediol, which may be produced via direct fermentation of sugars from wheat straw (e.g. A. Forte et al. Materials 2016, 9(7), 563). Biobased polypropylene, for example, has been reportedly produced in the last decade from natural materials such as corn, sugar cane and vegetable oil.

According to another embodiment, the deep eutectic solvent of the invention may comprise at least two alcohols, when each one of them comprises two or three alcohol functional groups and has a number of carbon atoms in the range of from 2 to 12. According to a preferred embodiment, these at least two alcohols can be independently defined further according to any of the above embodiments or any combination thereof.

In another embodiment, the deep eutectic solvent of the invention may further comprise at least one further ingredient, which can be introduced in order to further tailor the properties of the DES and products subsequently obtained use the DES, such as the lignin prepolymer as defined according to the fourth aspect of the invention. By way of illustration, said at least one further ingredient may be, but is not limited to, a monohydric alcohol *(i.e.* an alcohol with one alcohol functional group); preferably, said at least one further ingredient may be a C2-C6 alcohol; more preferably, said at least one further ingredient may be a C3-C6 alcohol; still more preferably, said at least one further ingredient may be a C4-C6 alcohol such as butanol. When this further ingredient is an alcohol, preferred amounts thereof are less than 10 wt.% of the total weight of the DES, so that DES properties can be tailored without significantly affecting DES stability and other properties.

Also, in still another embodiment, said at least one further ingredient may alternatively be a fatty acid, preferably, an unsaturated fatty acid such as linoleic acid. In this regard, the presence of a certain amount of a fatty acid may be particularly desirable for the subsequent preparation of alkyd resins, since by reacting the deep eutectic solvent with lignin, it would be possible to directly obtain a lignin prepolymer which already incorporates fatty acid segments in its structure. When said at least one further ingredient is a fatty acid used for preparing alkyd resins, recommended amounts of said fatty acid may amount up to about 50 wt.% of the total weight of the DES.

In particular, when the deep eutectic solvent of the invention comprises more than one alcohol as defined above, one, more than one, or all of these alcohols can be biobased; more preferably, one, more than one, or all of these alcohols can be biobased, with a biobased alcohol content is higher than 25 wt.%, higher than 50 wt.%, higher than 60 wt.%, higher than 70 wt.% or even 100 wt.%. In these particular cases, wherein there is more than one alcohol, the amount of biobased alcohol content is to be understood as the biobased content by weight in respect the total amount of alcohols found in the DES.

As already mentioned, the present invention provides a deep eutectic solvent which comprises water in an amount of from 10 to 50 wt.% of the total weight of the deep eutectic solvent. In a preferred embodiment, said amount of water can be higher than 10 wt.% but equal to or less than 50 wt.% of the total weight of the deep eutectic solvent. Said amount of water can be more preferably in the range of 20-50 wt.%, still more preferably in the range of 20-40 wt.%, still even more preferably in the range of 20-35 wt.%, and still even much more preferably in the range of 25-35 wt.% of the total weight of the deep eutectic solvent. Said amount of water can also be in the range of 10-35 wt.%, 25-45 wt.% or 25-40 wt.% of the total weight of the deep eutectic solvent. Water may advantageously contribute to provide a lower viscosity DES, thus making it easier to solubilise high molecular weight compounds such as lignin.

In a preferred embodiment, the deep eutectic solvent of the invention may comprise:
- at least one carboxylic acid which has a number of carbon atoms in the range of from 4 to 7 carbon atoms or from 4 to 6 carbon atoms, comprises two or three carboxylic acid functional groups, and is a saturated or unsaturated aliphatic carboxylic acid or an unsaturated cyclic carboxylic acid;
- at least one alcohol which comprises two or three alcohol functional groups, and which is selected from the group consisting of:
   (i) alcohols having a number of carbon atoms in the range of from 2 to 12 carbon atoms, comprising two or three alcohol functional groups,
   (ii) polyethylene glycol, and
   (iii) polypropylene glycol; and
- water in an amount of from 10 to 50 wt.% of the total weight of the deep eutectic solvent.

In another preferred embodiment, the deep eutectic solvent of the invention may comprise:
- at least one carboxylic acid which is selected from the group consisting of succinic acid, maleic acid, fumaric acid, glutaric acid, adipic acid, citric acid, aconitic acid, dehydromucic acid, pimelic acid, azelaic acid and sebacic acid; preferably, at least one carboxylic acid which is selected from the group consisting of succinic acid, maleic acid, fumaric acid, glutaric acid, adipic acid, citric acid, aconitic acid, dehydromucic acid and pimelic acid;
- at least one alcohol which is selected from the group consisting of 1,2-ethanediol (1,2-EDO, ethylene glycol or glycol), 1,3-propanediol (1,3-PDO), 1,2,3-propanetriol (glycerol or glycerine), 1,4-butanediol (1,4-BDO), 2,3-butanediol (2,3-BDO), 1,4-pentanediol (1,4-PDO), triethanolamine (TEA), polyethylene glycol (PEG) and polypropylene glycol (PPG); and
- water in an amount of from 10 to 50 wt.% of the total weight of the deep eutectic solvent.

According to another embodiment of the invention, the deep eutectic solvent of the invention may comprise:
- at least one carboxylic acid which is selected from the group consisting of maleic acid, fumaric acid and citric acid, more preferably, selected from maleic acid and citric acid;
- at least one alcohol which is selected from the group consisting of 1,3-propanediol, 1,4-butanediol and 2,3-butanediol, more preferably, selected from 1,4-butanediol and 2,3-butanediol; and
- water in an amount of from 10 to 50 wt.% of the total weight of the deep eutectic solvent.

In another embodiment, the deep eutectic solvent of the invention can have a molar ratio of carboxylic acid(s) to alcohol(s) which is in the range of from 0.5:1 to 2:1. In other preferred embodiments, said molar ratio of carboxylic acid(s) to alcohol(s) can be in the range of from 0.8:1 to 1.8:1, from 0.9:1 to 1.8:1, from 0.9:1 to 1.6:1, from 0.9:1 to 1.5:1, from 0.9:1 to 1.4:1, from 0.9:1 to 1.3:1, from 0.9:1 to 1.2:1, or have the specific values of about 1:0.5, 1:0.8, 1:0.9, 1:1, 1.1:1, 1.2:1 or 1.5:1, or preferably, of 2:1, 1:0.8, 1:0.9, 1:1, 1.1:1, 1.2:1 or 1.5:1. When there is more than one alcohol and/or carboxylic acid, the molar values used for establishing the molar ratio of alcohol(s) to carboxylic acid(s) are in each case calculated on the basis of the total amount of alcohols and the total amount of carboxylic acids, respectively, found in the DES.

The term "about" when used in the context of the present invention preceding a number and referring to it, is to be understood as designating any value lying within the range defined by the number ±5%, more preferably a range defined by the number ±2%. For example, the expression "about 10" should be construed as "within the range of 9.5 to 10.5", preferably "within the range of 9.8 to 10.2".

The deep eutectic solvents of the invention may be formed by any method known in the art. For example, the compounds may be directly mixed in solid state, typically at 25°C, for example as powders, and then water may be added, followed by gentle heating and optional stirring to achieve melting and complete homogeneisation, and cooling, with the resulting deep eutectic solvent typically remaining liquid at 22-25°C. Alternatively, each compound in solid form may be sequentially added to the selected amount of water to form the DES mixture, or it would even be possible to directly mix the compounds in solid state, and then place them in a humid environment so that they can absorb water until the mixture liquefies, with optional stirring. According to another exemplary method suitable for preparing the DES of the invention, it would also be possible to form the DES by first mixing the compounds in solid state, usually at 25°C, for example as powders, in a recipient, and then apply a vapour stream onto said mixture, so that they may progressively absorb water until liquefaction, with optional stirring. These last examples, wherein water is later added onto the solid mixture, may also be particularly advantageous to identify the specific amount of water required to form a desired deep eutectic solvent after selecting the specific carboxylic acid(s) and alcohol(s).

The deep eutectic solvents of the invention may be formed by other methods comprising, for example, first heating one compound, preferably the one with the lowest melting point, until it melts. Subsequent components can then be mixed into and dissolved in the melted first component under optional stirring. On cooling, the deep eutectic solvent typically remains liquid at 22-25°C. This method is particularly suited to large scale preparation.

Another alternative method for preparing these deep eutectic solvents, in particular, those involving compounds which are not heat stable, or wherein homogeneisation would be significantly time-consuming, may involve first dissolving those compounds which are solid at 25°C in significant amounts of water, heating the mixture, and then partially removing water (e.g. by evaporation under reduced pressure) until the desired ratio to form the DES is obtained. In this method, water is typically removed until a chosen lignin solubility value is obtained, as well as an acceptable viscosity.

According to a second aspect, the invention provides the use of a deep eutectic solvent according to the first aspect of the invention as solvent for solubilising lignin. More specifically, the invention provides the use of a deep eutectic solvent according to any one of the embodiments of the first aspect of the invention as solvent for solubilising lignin from a lignin material.

The expression "lignin material" in the context of the present invention means lignin derived from any kind of lignocellulose pulping processes, *e.g.* kraft, sulfite, soda, organosolv or steam-exploded lignin, as well as natural derived lignin such as sawdust from wood residues and lignin-based fibres. In a preferred embodiment, the lignin material is kraft lignin (KL). Exemplary types of lignin which are particularly suitable for the invention include industrial grade softwood kraft lignins such as Indulin AT, or UPM's BioPiva^{™} 190 (90% purity) or UPM's BioPiva^{™} 199 (99% purity), which are kraft lignins originating from pulping processes. Said expression may also include other suitable lignins such as HydrolysisL11 lignin, which is a purified poplar hydrolysis lignin which was obtained by purification of a residual poplar hydrolysis lignin from BIOCHEMTEX formed during bioethanol production, as disclosed by Svensson et al. in the scientific publication entitled "Valorisation of hydrolysis lignin rest from bioethanol pilot plant: process development and upscaling", which is to be published in Industrial Crops and Products 2020, volume 156, issue 15, said publication being already made publicly available online on 7 September 2020 by Science Direct (https://d oi.org/10.1016/j.in dcrop.2020.112869). It will become apparent that lignin materials with different purity grades may be used depending on the final application for which they are intended.

Through the specific combinations of alcohol(s), carboxylic acid(s) and water of the deep eutectic solvents of the invention, as defined above, it has been surprisingly possible to solubilise a high amount of lignin from a lignin material, as shown in Example 2, using temperatures and mixing times which are significant lower than those reported in the art. As illustrated by the Examples, in many cases it has even been possible to solubilise lignin at room temperature (*i.e.* about 22°C).

These smooth solubilisation conditions advantageously contribute to minimize thermal degradation of the lignin material, which is typically observed when higher temperatures (*e.g*. 300°C) are used and results in the undesired cleavage of functional groups, thus eventually leading to low molecular weight products and reactive and unstable free radicals. Furthermore, the deep eutectic solvents of the invention avoid the use of known toxic solvents such as DMF, DMSO or pyridine, which are typically used in the prior art to solubilise lignin, thus becoming a more environmentally-friendly alternative.

In a particular embodiment, the deep eutectic solvents of the invention may be used as solvents for solubilising at least 30 wt.% of lignin from a lignin material, preferably, at least 40 wt.% of lignin from a lignin material.

In another embodiment, the deep eutectic solvents of the invention may be used as solvents for solubilising at least 30 wt.% of lignin from a lignin material at a temperature equal to or higher than 22°C, or at a temperature of about 100°C. More preferably, the deep eutectic solvents of the invention may be used as solvents for solubilising at least 30 wt.% of lignin from a lignin material at a temperature equal to or higher than 22°C, or at a temperature of about 100°C, in a period of time in the range of from 1 to 3 hours, preferably, in the range of 1 to 2 hours, more preferably, in a period of time of about 1 hour.

In still another embodiment, the deep eutectic solvents of the invention may be used as solvents for solubilising at least 40 wt.% of lignin from a lignin material at a temperature equal to or higher than 22°C, or at a temperature of about 100°C. More preferably, the deep eutectic solvents of the invention may be used as solvents for solubilising at least 40 wt.% of lignin from a lignin material at a temperature equal to or higher than 22°C, or at a temperature of about 100°C, in a period of time in the range of from 1 to 3 hours, preferably, in the range of 1 to 2 hours, more preferably, in a period of time of about 1 hour.

According to a third aspect, the invention provides the use of a deep eutectic solvent according to the first aspect of the invention for preparing a lignin prepolymer. In one embodiment, the invention provides the use of a deep eutectic solvent according to the first aspect of the invention for preparing a lignin prepolymer, wherein said use further comprises solubilising lignin.

The term "prepolymer" refers to an oligomer, which has been formed by reaction of a monomer or group of monomers to form an intermediate molecular weight product, and is capable of undergoing further polymerization.

It has been surprisingly found that, in addition to the efficient solubilisation of lignin, the deep eutectic solvents of the invention may also simultaneously serve as a source of carboxylic acids for carrying out lignin derivatization, in particular, lignin esterification. That double role of the DESs of the invention makes it possible to prepare a highly-biobased lignin derivative under smooth conditions in good yields, wherein both lignin and the selected DES may be obtained or derived from natural sources. Also, a particularly suitable reaction media is created based on the good lignin solubilisation properties of the DESs of the invention, which act as solvent and also as reagent due to its carboxylic acid ingredient(s), and also its alcohol(s). Regarding the latter, it is postulated that since the carboxylic acids used in the DES of the invention have at least two carboxylic groups, DES alcohols may partially react with the lignin prepolymer through esterification reactions with the still unreacted carboxylic groups of the carboxylic acids which have already reacted with lignin. Thus, a complex lignin prepolymer may be formed, which would include segments deriving from the DES carboxylic acids, and also segments deriving from the DES alcohols, which would be linked to the lignin structure through carboxylic acids. Furthermore, the enhanced solubility which is achieved by using the DES of the invention provides an advantageous intimate contact between the lignin material and the carboxylic acids, which facilitates esterification.

Furthermore, the specific selection of the carboxylic acid(s) and alcohol(s) of the deep eutectic solvent, as well as the amount of water, serves to provide a lignin prepolymer *(i.e.* lignin oligoester) which can be tailored depending on the final applications for which either the lignin prepolymer, or the cured polymer derivative that can be obtained from that prepolymer, is intended. By way of illustration, the higher the number of carbons of the alcohol(s) in the DES is, the more flexible becomes the lignin prepolymer and also the polymers derived therefrom. For example, lignin prepolymers with enhanced flexibility were obtained when deep eutectic solvents with at least one alcohol with 10-12 carbons were used, and this effect is dramatically increased when polyethylene glycol (PEG) or polypropylene glycol (PPG) are used in the deep eutectic solvent.

In a preferred embodiment, the deep eutectic solvent used may be as defined according to the first aspect of the invention, with the proviso that the at least one carboxylic acid is an unsaturated acid. In this regard, without wishing to be bound by theory, in view of the experiments provided in the Examples of the present application, as well as further additional experiments, it is postulated that unsaturated carboxylic acids provide particularly excellent results in terms of lignin solubility due to the occurrence of π-π interactions with lignin aromatic groups such as those of coniferyl alcohol, sinapyl alcohol, and *p*-coumaryl alcohol.

Additionally, since the carboxylic acids of the invention may easily form carboxylic anhydrides, it is believed that these anhydrides may act as catalysts, so an autocatalyzed esterification may take place.

In a particular embodiment of the use according to the third aspect of the invention, a catalyst is also used to increase catalytic rate and/or esterification degree. More preferably, a catalyst which is selected from a metal, Brønsted or Lewis acid may be used.

According to a fourth aspect, the invention provides a process for preparing a lignin prepolymer, comprising:
a) contacting a lignin material with a deep eutectic solvent according to the first aspect of the invention;
b) heating said mixture to a temperature in the range of from about 80°C to about 160°C to produce a lignin prepolymer.

The term "contacting", as used throughout the patent application, is to be understood as meaning that a first compound, composition or solvent is allowed to come in contact with at least one other compound, composition or solvent to form a mixture. Such coming in contact may mean that the first compound, composition or solvent is added to the at least one other compound, composition or solvent to form a mixture, or the other way around.

The lignin prepolymer resulting product from step b) of the above process is a lignin oligoester, that is, a lignin oligomer wherein lignin has been partially esterified. Said lignin prepolymer has increased viscosity compared with the starting lignin material, and thus requires more stress to flow. The lignin prepolymer is typically a liquid, more particularly, a high-viscosity liquid.

In a preferred embodiment, the amount of lignin material which is contacted in step a) with the deep eutectic solvent is in the range of 10 to 90 wt.% lignin relative to the total weight of the deep eutectic solvent, more preferably, in the range of 30 to 60 wt.% lignin relative to the total weight of the deep eutectic solvent.

It will become apparent for the skilled person that, by modifying the amount of lignin relative to the amount of DES within this range, it is possible to easily adjust the lignin to carboxylic acid ratio, and thus influence the esterification rate. Similarly, esterification rate may also be controlled by modifying the amount of carboxylic acid(s) in the DES, and consequently, the amount of carboxylic acid groups, thus modulating the molar ratio of -COOH groups per weight of lignin. This control may be particularly desirable to achieve a lignin prepolymer with specific characteristics that make it suitable for the final use for which it is intended.

Step b) may include heating the mixture resulting from step a) to a temperature in the range of from about 80°C to about 160°C during a period of time of at least 30 minutes, preferably, during a period of time in the range of 30 minutes to 4 hours. In specific embodiments, step b) may include heating the mixture resulting from step a) to a temperature in the range of from about 80°C to about 160°C during a period of time of about 30 minutes, about 60 minutes, about 2 hours or about 4 hours.

In a particular embodiment of this fourth aspect of the invention, the process may further comprise the addition of a catalyst to increase catalytic rate and/or esterification degree. Preferably, the process further comprises the addition of a catalyst which is selected from the group consisting of a metal, Brønsted and Lewis acid. Said catalyst can be directly added to the deep eutectic solvent, before or after dissolving the lignin material. Alternatively, said catalyst can be added during heating step b).

In another embodiment, step b) of the process may comprise first heating the mixture resulting from step a) at a first temperature during a period of time sufficient for facilitating lignin dissolution, and then further heating the mixture at a second temperature higher than the first temperature. In particular, step b) of the process may comprise first heating the mixture resulting from step a) at a temperature of from about 80°C to about 100°C during a period of time sufficient for facilitating lignin dissolution, followed by a second heating step, wherein said mixture is heated in a temperature in the range of from higher than about 100°C to about 160°C to produce a lignin prepolymer.

According to another embodiment of this fifth aspect of the invention, the process for preparing a lignin prepolymer optionally further comprises an additional step, after step a) and prior to step b), wherein the resulting mixture from step a) is heated to a temperature higher than 50°C but less than 80°C, preferably, a temperature higher than 60°C but less than 80°C.

According to a fifth aspect, the invention provides a lignin prepolymer obtainable or obtained by the process according to the fourth aspect of the invention.

In a particular embodiment, the invention provides a lignin prepolymer obtainable or obtained by a process comprising:
a) contacting a lignin material with a deep eutectic solvent according to the first aspect of the invention;
b) heating said mixture to a temperature in the range of from about 80°C to about 160°C to produce a lignin prepolymer.

Said process may be further defined according to any of the above embodiments of the fourth aspect of the invention, or any combination thereof.

Due to the particularly high solubility of lignin materials in the deep eutectic solvents of the invention, it has been advantageously possible to produce lignin prepolymers *(i.e.* lignin oligoesters) with high lignin content.

According to one embodiment, the lignin prepolymer obtainable by the process according to the invention has a lignin content of 10% to 50% by weight of the total weight of the lignin prepolymer.

In another embodiment, the lignin prepolymer is a biobased lignin prepolymer, in particular, the lignin polymer has a biobased content which is higher than 25 wt.%, preferably higher than 50 wt.%, or still preferably higher than 60 wt.%. Said biobased content may advantageously provided from lignin from natural origin and/or the biobased DES which is directly involved in the esterification process, thus leading to the obtention of said biobased lignin oligoester or prepolymer.

These lignin prepolymers can be readily converted into a variety of high-value final products by reaction with a curative or chain extending agent, or directly used before curing. In fact, they advantageously provide a way to produce an intermediate product (oligoester) which is easier to handle *(e.g.* in terms of viscosity) and store than final products, and which can then be modified *à la carte* depending on the end-use products of interest or chosen applications.

As already mentioned, the deep eutectic solvent components are directly involved in the functionalization of lignin, since carboxylic acids undergo direct esterification with lignin molecules, and alcohols can contribute to further functionalize the resulting prepolymer through their reaction with the free carboxylic groups of the carboxylic acids which are linked to lignin through esterification. Thus, depending on the final use of the lignin prepolymers, or of the polymerized lignin co-polyesters which can be obtained therefrom by curing, the polyester molecular weight and chain termination functional groups can be easily regulated by selecting a specific molar ratio of carboxylic acid(s) to alcohol(s) in the deep eutectic solvent. Also selecting more than one alcohol and/or more than one carboxylic acid as defined above, as DES components, may be of interest to modulate the properties of the end product.

According to a sixth aspect, the invention provides the use of a lignin prepolymer obtainable by the process according to the fourth aspect of the invention for producing films, coatings, insulating foams, adhesives, binders, composites or for fibre sizing or for radical curing.

In a particular embodiment, said coatings can be alkyd coatings, polyurethane coatings or paperboard coatings.

Alkyd coatings are widely used for paints since the 1930s, and are based on alkyd resins. Alkyd resins can be formed by reaction of the lignin prepolymer of the invention with triglycerides (alcoholysis) or free fatty acids (fatty acid process), and their final properties depend on the composition of the resin, and also on reaction times and temperatures, which make it possible to control the structure of the resulting alkyd resin or even its drying properties. Most fatty acids used in alkyd resins are derived from vegetable oils such as soybean oil. Therefore, alkyd coatings obtained by using the lignin prepolymers of the invention, which are already biobased due to their high lignin content, would be particularly advantageous biobased alkyd coatings, which provide for a more sustainable alternative to traditional alkyd resins, by replacing fossil-based phthalic acid. Linseed oil is typically used for fast drying alkyds, tall oil and safflower oil for drying alkyds, and castor oil and coconut oil are extensively used in non-drying alkyds. Alkyd resins can be further modified with phenolic resin, acrylic monomers, styrene, epoxy resin, silicone resin or isocyanates, so they can be tailored depending on the properties required for each final application. Thus, properties of the resulting resins can be tailored in view of the properties required for the particular applications. Except for phthalic anhydride, the other major components of alkyd coatings *(i.e.* glycerol and fatty acids or triglyceride oils) can be derived from low cost renewable resources.

In this regard, since the deep eutectics of the invention may also contain certain amounts of fatty acids, it would even be possible to directly obtain lignin prepolymers including fatty acid functionalities in their structure through the process according to the fourth aspect of the invention, in particular, when further adding to the DES composition one or more fatty acids in a total amount equal to or less than about 50 wt.% of fatty acid(s) in respect of the total weight of the DES. Thus, it would be possible to advantageously produce lignin prepolymers which would be particularly suitable for a final use as alkyd resins.

On the other hand, biobased polyurethane (PU) coatings can also be easily prepared by reacting the lignin prepolymers (*i.e.* lignin oligoesters) of the invention with diisocyanate. Furthermore, depending on the properties of the selected starting lignin material and DES, which were used for preparing the lignin prepolymer, a number of properties of the final polyurethanes can also be tailored, such as molecular weight, glass transition temperature, phenylpropane subunits distribution, etc.

As for paperboard coatings, different lignin prepolymers or oligoesters can be obtained using the selected lignin material and a DES according to the invention, with particularly enhanced thermoplastic properties. Due to this, these prepolymers can be advantageously used to form a coat on paperboard substrates. Such modified lignin coatings may exhibit a high and stable contact angle, while leaving the tensile strength of the paperboard unaffected. Therefore, the technical solution herein provided may lead to the obtention of sustainable biobased barrier materials in, for example, fibre-based packaging materials, which may eventually replace oil-based barriers.

Also described is a process for the preparation of a polymer, wherein a lignin prepolymer obtained according to the process defined according to a fourth aspect of the invention is polymerized.

Throughout the description and the claims, the words "comprise", "include" and variations thereof are not intended to exclude other technical features, ingredients or steps. Additional advantages and features of the invention will become apparent to those skilled in the art upon examination of the description or may be learned by practice of the invention without undue burden.

### EXAMPLES

The following examples are provided by way of illustration and shall not be construed as limiting the invention:

### Example 1 -Preparation of exemplary deep eutectic solvents according to the invention

As a general method, selected alcohol(s) and carboxylic acid(s) were weighed out in a specific alcohol-to-carboxylic acid ratio and mixed together in a 10-ml glass vial together with a specific water amount. In order to facilitate dissolution of the acids, closed vials containing the mixture were heated at 50°C in an oven and occasionally shaken, in particular during 1 hour, until the deep eutectic solvent is formed. Mixtures that did not dissolve completely were gradually heated further in the oven (70, 80 and 100°C) until they also dissolved.

Table 1 below illustrates 12 different exemplary deep eutectic solvents of the invention, which are based on different combinations of alcohol (1,4-butanediol (1,4-BDO) or 2,3-butanediol (2,3-BDO)), carboxylic acid (maleic acid or citric acid) and specific amounts of water corresponding to 10, 30 and 50 % by weight of the total weight of the mixture. These DESs of the invention were prepared according to the above general method, using an equimolar alcohol:carboxylic acid (A:CA) ratio.

Viscosity of these deep eutectic solvents was measured at 25°C and shear rate of 10 s⁻¹ using Bohlin Gemini 200 rheometer. Viscosity values are shown in Table 1:

**Table 1**

| **Entry** | **DES reference** | **Alcohol** | **Carboxylic acid** | **A:CA molar ratio** | **Water (wt. % of total mixture wt.)** | **Viscosity (mPa·s)** |
|---|---|---|---|---|---|---|
| 1 | 14BDOM10 | 1,4-BDO | Maleic acid | 1:1 | 10.00 | 96.0 |
| 2 | 14BDOC10 | 1,4-BDO | Citric acid | 1:1 | | 1652.0 |
| 3 | 14BDOM30 | 1,4-BDO | Maleic acid | 1:1 | 30.00 | 26.4 |
| 4 | 14BDOC30 | 1,4-BDO | Citric acid | 1:1 | | 64.2 |
| 5 | 23BDOM30 | 2,3-BDO | Maleic acid | 1:1 | | 22.9 |
| 6 | 23BDOC30 | 2,3-BDO | Citric acid | 1:1 | | 87.1 |
| 7 | 14BDOM50 | 1,4-BDO | Maleic acid | 1:1 | 50.00 | 17.1 |
| 8 | 14BDOC50 | 1,4-BDO | Citric acid | 1:1 | | 15.5 |
| 9 | 23BDOM50 | 2,3-BDO | Maleic acid | 1:1 | | 14.3 |
| 10 | 23BDOC50 | 2,3-BDO | Citric acid | 1:1 | | 20.8 |
| 11 | 14BDOM30 | 1,4-BDO | Maleic acid | 1:0.5 | 30.00 | 15.6 |
| 12 | | | | 1:0.8 | | 25.6 |
| 13 | | | | 1:0.9 | | 25.6 |
| 14 | | | | 1:1.1 | | 27.0 |
| 15 | | | | 1:1.2 | | 26.8 |
| 16 | | | | 1:1.5 | | 26.2 |
| 17 | PEGM30 | PEG-400 | Maleic acid | 1:1 | 30.00 | 52.8 |

| | | | | | | |
|---|---|---|---|---|---|---|
| 1,4-BDO = 1,4-butanediol; 2,3-BDO = 2,3-butanediol; PEG400 = polyethylene glycol 400 g/mol. A/CA molar ratio = alcohol/carboxylic acid molar ratio | | | | | | |

All tested mixtures formed transparent solutions. By comparing entries 3-10 of Table 1, the lowest viscosities values were obtained with mixtures containing 2,3-BDO, maleic acid and either 30 wt.% or 50 wt.% water: 22.9 mPa·s for 23BDOM30 (entry 5) and 14.3 mPa·s for 23BDOM50 (entry 9). When using 30 wt.% water (entries 3-6), the lowest viscosity values were obtained with deep eutectic solvents containing maleic acid and either 1,4-BDO (14BDOM30) or 2,3-BDO (23BDOM30). Density of these two low-viscosity DES was found to be 1.13 g/ml in both cases.

Deep eutectic solvents comprising citric acid were generally found to have higher viscosity values compared to maleic acid-containing solutions, although low viscosities were observed in all four examples with 50 wt.% water involving maleic acid or citric acid.

Entries 3 and 11-16 show the effect on viscosity produced by varying the A/CA molar ratio in deep eutectic solvents comprising 1,4-butanediol, maleic acid and 30 wt.% water. Viscosity values were found to increase on using higher carboxylic acid amounts up to a peak value of 27.0 mPa·s with an A/CA molar ratio 1:1.1. Besides, except for the lowest viscosity value which was obtained when using an A/CA ratio of 1:0.5 (entry 11), viscosity values in the range of 25-27 mPa·s were obtained in all experiments shown in entries 3 and 12-16.

Entry 17 shows the viscosity value of 52.8 mPa·s corresponding to a deep eutectic solvent based on polyethylene glycol 400, maleic acid and 30 wt.% water. Said DES advantageously provided a viscosity value which was found to be lower than that of PEG400 alone. The advantage of using PEG400 as DES component is that polyethylene glycol chains contribute to lignin plastification, thus making it possible to melt lignin al lower temperatures and produce stable aqueous dispersions. Prepolymers and final polymers produced with lignin in said PEG400-containing DES are deemed comparable to known polyurethanes based on oxypropylated lignins. Besides, the production method of the present invention advantageously overcomes known problems associated with oxypropylation such as high costs involved, the inherent risk of explosion or the inherent toxicity of the products.

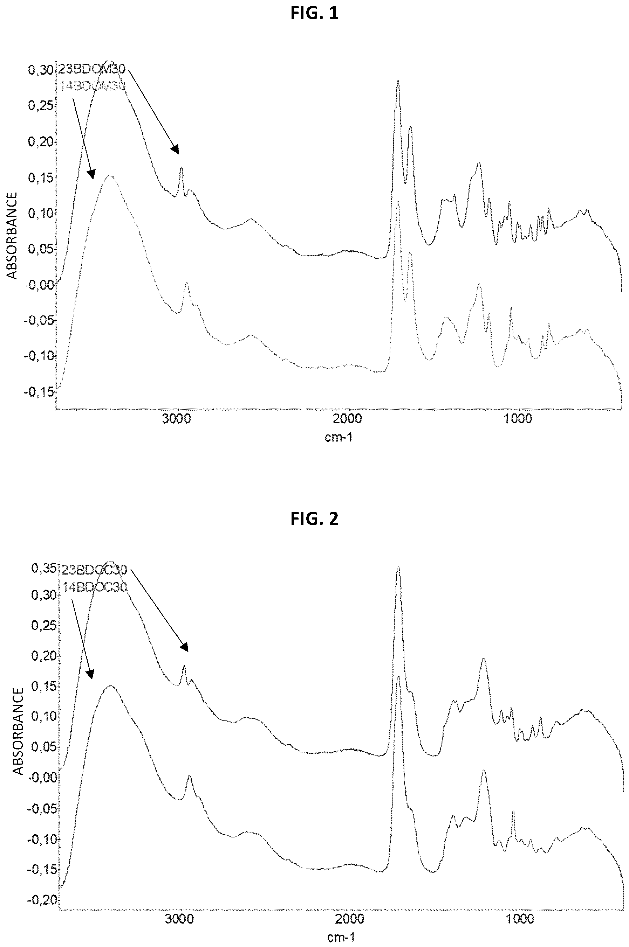

Deep eutectic solvents shown in entries 3-6 *(i.e.* 14BDOM30, 14BDOC30, 23BDOM30 and 23BDOC30) were further characterized by ATR-FTIR (see Figs. 1 and 2). ATR-FTIR was performed directly on resin samples using a Nicolet iS5/ATR iD7 from Thermo Scientific. The transmittance spectra were transformed to adsorption and ATR-corrected. The number of scans was 16 and the resolution 4 cm⁻¹.

ATR-FTIRs of 23BDOM30 (entry 5) and 14BDOM30 (entry 3), which are eutectic solvents formed with maleic acid, have O-H stretching vibration around 3369 cm⁻¹, C-H stretching vibration in CH₂ and CH₃ groups at 2945 and 2888 cm⁻¹, C=O stretching vibration at 1702 cm⁻¹, C=C stretching at 1629 cm⁻¹ and C-O stretching vibration at 1226 cm⁻¹ (see Figure 1).

ATR-FTIRs of 23BDOC30 (entry 6) and 14BDOC30 (entry 4), which are eutectic solvents formed with citric acid, have an O-H stretching vibration around 3369 cm⁻¹, a C-H stretching vibration in CH₂ and CH₃ groups at 2945 and 2888 cm⁻¹, a C=O stretching vibration at 1710 cm⁻¹, and a C-O stretching vibration at 1209 cm⁻¹ (see Figure 2).

### Example 2 - Experimental tests of lignin solubilisation in the deep eutectic solvents according to the invention

To investigate the solubility of lignins in deep eutectic solvents according to the invention, different amounts of highly purified Kraft lignin BioPiva^{™} 199 (99% purity; UPM) were added to different DES mixtures and magnetically stirred at 22°C and 100°C during 1 hour. Thereafter solutions were centrifugated at 19500 rpm for 10 min in Eppendorf tubes to separate non-dissolved particles.

Ratio of dissolved lignin in the DES mixtures was quantitatively determined by UV-VIS spectroscopy at 280 nm, specifically, by analysing phenolic content through absorbance measurements. Samples were dissolved in 0.2 M NaOH and calibration curves were made with each type of lignin.

The following lignins were also tested under the same conditions indicated above *(i.e.* heating at 22°C and 100°C during 1 hour under stirring conditions): Indulin^{®} AT *(i.e.* softwood Kraft lignin from MeadWestvaco); Biolignin^{®} *(i.e.* straw organosolv lignin from CIMV); and HydrolysisL11 lignin *(i.e.* purified poplar hydrolysis lignin produced as disclosed in the scientific publication which is to be published in Industrial Crops and Products 2020, volume 156, issue 15, said publication being already made publicly available online on 7 September 2020 by Science Direct via the following link: https://doi.org/10.1016/j.indcrop.2020.112869).

HydrolysisL11 has a weight average molecular weight (Mw) of 8593 Da, a number average molecular weight (Mn) of 1506 Da, and was found to have 5.77 mmol -OH groups / gram *(i.e.* Mw/Mn ratio), as determined by ³¹P-NMR.

Results from these experimental tests on lignin solubilisation in DES at different temperatures (22°C, 100°C) are summarized in Table 2 below. Dissolution rates were determined by UV-VIS spectroscopy at 280 nm wavelength. For UV-VIS determination, samples were dissolved in 0.2 M NaOH and calibration curves were made with each type of lignin.

Table 2 also includes viscosity determination values obtained at 40°C and shear rate of 10 s⁻¹ using Bohlin Gemini 200 rheometer.

**Table 2**

| **Entry** | **DES reference** | **Lignin material** | **Added lignin (%)*** | **% Dissolved lignin (22°C, 1 h)** | **% Dissolved lignin (100°C, 1 h)** | **Viscosity of lignin dissolved at 100°C, 1 h (mPa.s)** |
|---|---|---|---|---|---|---|
| 1 | 14BDOM30 | BioPiva^{™} 199 | 10 | 8.2 | 10.4 | 74.8 |
| 2 | 14BDOM30 | BioPiva^{™} 199 | 20 | 14.3 | 20.1 | 231.2 |
| 3 | 14BDOM30 | BioPiva^{™} 199 | 30 | 22.7 | 31.6 | 5275 |
| 4 | 14BDOM30 | BioPiva^{™} 199 | 40 | ** | 41.0 | 49087 |
| 5 | 14BDOM10 | BioPiva^{™} 199 | 40 | ** | 39.6 | 54231 |
| 6 | 14BDOM30 | Indulin^{®} AT | 30 | 30.7 | 30.9 | 4001 |
| 7 | 14BDOM30 | Biolignin^{®} | 30 | 29.5 | 31.6 | 7735 |
| 8 | 14BDOM30 | HydrolysisL11 | 30 | 27.7 | 31.8 | 4365 |
| 9 | 23BDOM30 | BioPiva^{™} 199 | 30 | 24.5 | 30.6 | 6363 |

| | | | | | | |
|---|---|---|---|---|---|---|
| * % of added lignin corresponds to the weight of lignin material relative to the total weight of the mixture comprising DES and lignin material. ** Too viscous to separate particles by centrifugation. | | | | | | |

Entries 1-4 of Table 2 correspond to solubilisation and viscosity values observed when mixing increasing amounts of BioPiva^{™} 199 (UPM) kraft lignin with deep eutectic solvent 14BDOM30. Results evidence that when 14BDOM30 with 30 wt.% water was used, good solubility of lignin was observed, even at lignin added amounts of least 40 wt.%, when heated to 100°C. Higher lignin concentrations *(e.g.* 50 and 60 wt.% added lignin) resulted in excessively high viscosity, and solidification was actually observed when cooling down, thus not making possible centrifugation.

Slightly higher lignin contents measured after dissolving at 100°C (Table 2, 6^{th} col.), in comparison with the original lignin added contents (Table 2, 4^{th} col.) were probably due to some residual evaporation of water from the closed vessels, as the sealings were not completely airtight.

Entry 5 of Table 2 corresponds to another experiment which differs from that indicated in entry 4 in the amount of water present in the DES *(i.e.* 30 wt.% and 10 wt.% water in 14BDOM30 and 14BDOM10 deep eutectic solvents, respectively). Results show that when 10 wt.% water was used in the deep eutectic solvent, it was also possible to achieve an excellent degree of lignin solubilisation. It is worth noting that the solution was significantly more viscous compared to that of the experiment based on the DES with 30 wt.% water *(i.e.* 14BDOM30)

On the other hand, lignin was found to be nearly insoluble when 50 wt.% water was used *(i.e.* 14BDOM50 DES), so it was not possible to determine its viscosity.

Entries 6-8 of Table 2 correspond to experimental tests carried out with other sources/types of lignin, namely, Indulin^{®} AT, Biolignin^{®} and HydrolysisL11 lignin, and 14BDOM30 as DES. In all cases, their solubility was found to be equal or higher than that observed with BioPiva^{™} 199 kraft lignin.

Finally, the solubility of BioPiva^{™} 199 kraft lignin in a different DESs was also evaluated. Specifically, dissolution rate of this kraft lignin, which was mixed/dissolved with 23BDOM30 in an added amount of 30 wt.%, was measured (entry 9 of Table 2). Lignin solubilisation rate with 23BDOM30 was similar to that observed with 14BDOM30, though viscosity values obtained with the latter were slightly lower than those obtained with 23BDOM30.

### Example 3 - Lignin prepolymer formation using illustrative deep eutectic solvents according to the invention

First, deep eutectic solvent 14BDOM30 was formed by mixing and dissolving 0.987 g maleic acid, 0.766 g 1,4-BDO and 0.751 g deionized water at 50°C.

0.4 g BioPiva^{™} 199 kraft lignin were then mixed with 14BDOM30 in glass flasks which were then closed and subject to stirring using a magnetic stir bar until complete dissolution was observed (absence of particles was determined by visual inspection). Subsequently, flasks were opened and placed in a forced air convection Memmert UF75 oven at 130°C during a time period of either 2 hours (sample 1) or 4 hours (sample 2).

Lignin prepolymer prepared with 4-hr. heating (sample 2) was found to have a significantly higher viscosity than that obtained with 2-hr. heating (sample 1).

Both samples were further characterized by ATR-FTIR. ATR-FTIR was performed directly on resin samples using a Nicolet iS5/ATR iD7 from Thermo Scientific. The transmittance spectra were transformed to adsorption and ATR-corrected. The number of scans was 16 and the resolution 4 cm⁻¹.

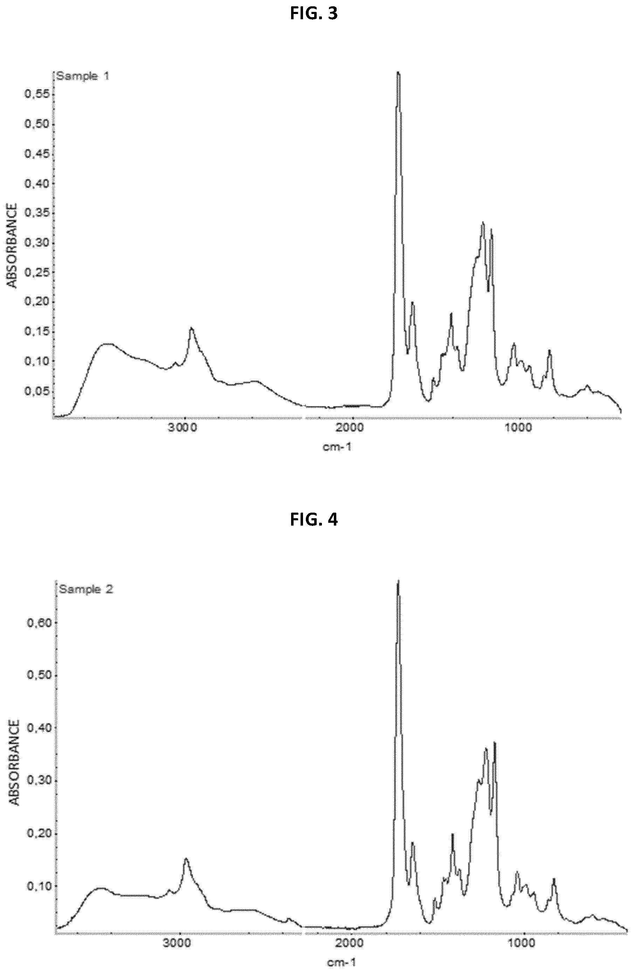

FT-IR spectra of both Sample 1 (see Fig. 3) and Sample 2 (see Fig. 4) showed an O-H stretching vibration around 3434 cm⁻¹, a C-H stretching vibration in CH₂ at 2954 cm⁻¹, a C=O stretching vibration at 1710 cm⁻¹, a C=C stretching vibration at 1633 cm⁻¹, aromatic skeleton vibrations at 1513 cm⁻¹ and 1407 cm⁻¹, and C-O stretching vibrations at 1207 cm⁻¹ and 1162 cm⁻¹.

### Example 4 - Lignin prepolymer formation using illustrative deep eutectic solvents according to the invention

A 10% molar excess of 1,4-BDO (23.570 g) to maleic acid (27.600 g) was used and deionized water was added (21.930 g) to form a DES by dissolving at 50°C. Then 30% of BioPiva^{™} 199 kraft lignin (31.330 g) was dissolved in the DES-mixture by heating up to 100°C. A 250-ml stirred reactor was used connected with a Dean-Stark trap and a condensation tube at 10°C. The esterification reaction proceeded by stepwise heating up the reactor, first to 125-135°C were the quantity of water (21.9 ml) containing the DES was evaporated. To force the esterification reaction 220 mg of para-toluene sulfonic acid was added as catalyst and the reaction was stepwise heated to 130, 139 and 160°C. A total of 29.3 ml water condensed in the trap. A highly viscous brown paste was formed with a carboxyl value of 87.8 mg KOH/g and hydroxyl value of 186.5 mg KOH/g.

Viscosity (as measured with a Bohlin Gemini 200 rheometer at 50°C and a shear rate 10 s⁻¹) was found to be 96600 mPa·s.

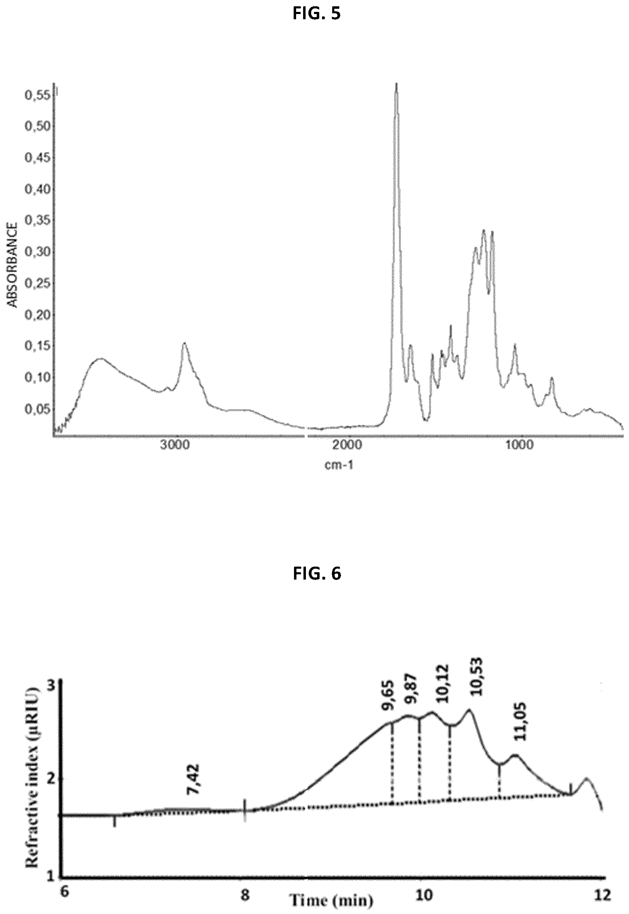

This lignin prepolymer (i.e. lignin oligoester, with resin consistency) was characterized by ATR-FTIR (under same conditions as those described in Example 3 for ATR-FTIR recording). The IR spectrum (See Fig. 5) showed an O-H stretching vibration around 3428 cm⁻¹, a C-H stretching vibration in CH₂ at 2954 cm⁻¹, a C=O stretching vibration at 1714 cm⁻¹, a C=C stretching vibration at 1639 cm⁻¹, aromatic skeleton vibrations at 1513, 1463 and 1406 cm⁻¹, and C-O stretching vibrations at 1205 and 1159 cm⁻¹.

Molecular weight distributions of the lignin prepolymer, as well as of lignin starting material (BioPiva^{™} 199 kraft lignin), were determined by using gel permeation chromatography (GPC) equipment AZURA^{®} from Knauer with IR detector and ClarityChrom SEC/GPC software to calculate Mn and Mw values. A Resipore column (300x7.5 mm) with 3 µm particles was used. The conditions used were: THF eluent, 1 ml/min, 40°C and polystyrene MW-standards. Samples were directly dissolved in THF and filtered through 0.45 µm syringe-filters before being analysed.

GPC chromatograms of both products are shown in Figs. 6 (BioPiva^{™} 199 kraft lignin) and 7 (lignin prepolymer), wherein refractive index (Y axis) vs elution time in min. (X axis) is shown. Recorded results indicating elution time (min.), average peak molecular weights (Mn and Mw) and peak areas (%) are included in Tables 3 (BioPiva^{™} 199 kraft lignin) and 4 (lignin prepolymer) shown below:

**Table 3**

| **Elution time (min)** | **Mn (Da)** | **Mw (Da)** | **Area %** |
|---|---|---|---|
| 7.42 | 23591 | 34752 | 1.60 |
| 9.65 | 1212 | 1277 | 32.09 |
| 9.87 | 897 | 899 | 15.78 |
| 10.12 | 740 | 743 | 17.35 |
| 10.53 | 506 | 523 | 22.48 |
| 11.05 | 167 | 203 | 10.70 |

**Table 4**

| **Elution time (min)** | **Mn (Da)** | **Mw (Da)** | **Area %** |
|---|---|---|---|
| 9.10 | 1717 | 1793 | 14.49 |
| 9.25 | 1307 | 1309 | 7.26 |
| 9.43 | 1139 | 1141 | 11.83 |
| 9.65 | 986 | 988 | 15.08 |
| 9.97 | 827 | 829 | 19.83 |
| 10.42 | 584 | 593 | 23.76 |
| 10.72 | 337 | 352 | 5.40 |
| 11.32 | 91 | 105 | 2.34 |

Lignin prepolymer was found to have a small quantity (2.34%) of unreacted monomer, probably 1,4 BDO, at 91 Da. On the other hand, it is postulated that the peak found at 337 Da may correspond to the esterification product of two 1,4-BDO molecules with two maleic acid molecules, deriving from the formation of the cyclic oligomer, which has a MW of 338 Da. Peaks observed at 584, 827 and 986 Da seem to be derived from the initial lignin fractions 506, 740 and 897 Da, which have increased their average weights by 80-90 Da. Finally, peaks at 1135, 1307 and 1717 Da seem to correspond to the BioPiva^{™} 199 original peak at 1212 Da, as the area % sum is similar.

By comparing Tables 3 and 4, it may also be concluded that the highest Mn peak originally observed in BioPiva^{™} 199 starting lignin at 23591 Da is no longer found in the lignin prepolymer. Lignin transformation resulted in a prepolymer with narrower polidispersity and smaller-average-Mn fractions, said features being particularly advantageous for many end uses. By way of illustration, Xu, Wang *et al. (ACS Sustainable Chem. Eng.* **2020,** *8*, 13517-13526) disclosed that the highest bonding strength in lignin-containing phenol-formaldehyde wood adhesives was obtained when lignin fractions with low molar mass and narrow dispersity were selectively used. However, the obtention of those suitable fractions required previous sequential solvent fractionation, thus inevitably increasing production costs. This limitation is unexpectedly overcome by the process of the invention, which directly leads to more homogeneous (*i.e.* with narrower polidispersity) prepolymers including less high molar mass fractions.

## Claims

1. A deep eutectic solvent comprising:
- at least one carboxylic acid which comprises at least two carboxylic acid functional groups and has a number of carbon atoms in the range of from 4 to 10;
- at least one alcohol which comprises two or three alcohol functional groups, and which is selected from the group consisting of:
(i) alcohols having a number of carbon atoms in the range of from 2 to 12 carbon atoms,
(ii) polyethylene glycol and
(iii) polypropylene glycol; and
- water in an amount of from 10 to 50 wt.% of the total weight of the deep eutectic solvent.

2. The deep eutectic solvent according to claim 1, wherein the at least one carboxylic acid has a number of carbon atoms in the range of from 4 to 6.

3. The deep eutectic solvent according to claim 1 or 2, wherein the at least one carboxylic acid comprises two or three carboxylic functional groups.

4. The deep eutectic solvent according to any one of claims 1-3, wherein the at least one carboxylic acid comprises two or three carboxylic acid functional groups, has a number of carbon atoms in the range of from 4 to 6, and is a saturated or unsaturated aliphatic carboxylic acid, or an unsaturated cyclic carboxylic acid further comprising at least one ether functional group.

5. The deep eutectic solvent according to any one of claims 1-4, wherein the at least one carboxylic acid is selected from the group consisting of succinic acid, maleic acid, fumaric acid, glutaric acid, adipic acid, citric acid, aconitic acid, dehydromucic acid and pimelic acid.

6. The deep eutectic solvent according to any one of claims 1-5, wherein the at least one carboxylic acid has a biobased total carboxylic acid content greater than 25 wt.%.

7. The deep eutectic solvent according to any one of claims 1-6, wherein the at least one alcohol is selected from the group consisting of alcohols having a number of carbon atoms in the range of from 2 to 6 carbon atoms, polyethylene glycol and polypropylene glycol.

8. The deep eutectic solvent according to any one of claims 1-7, wherein the at least one alcohol is selected from the group consisting of 1,2-ethanediol, 1,3-propanediol, 1,2,3-propanetriol, 1,4-butanediol, 2,3-butanediol, 1,4-pentanediol, triethanolamine, polyethylene glycol and polypropylene glycol.

9. The deep eutectic solvent according to any one of claims 1-8, wherein the at least one alcohol has a biobased total alcohol content greater than 25 wt.%.

10. The deep eutectic solvent according to any one of claims 1-9, wherein the molar ratio of carboxylic acid(s) to alcohol(s) is in the range of from 0.5:1 to 2:1.

11. Use of a deep eutectic solvent according to any one of claims 1-10 as solvent for solubilising at least 40 wt.% of lignin from a lignin material.

12. Process for preparing a lignin prepolymer, comprising:
a) contacting a lignin material with a deep eutectic solvent according to any one of claims 1-10;
b) heating said mixture to a temperature in the range of from 80°C to 160°C to produce a lignin prepolymer.

13. Lignin prepolymer obtainable by the process according to claim 12, which is a biobased lignin prepolymer having a biobased content higher than 25 wt.%.

14. Use of a lignin prepolymer obtainable by the process according to claim 12 for producing films, coatings, insulating foams, adhesives, binders, composites or for fibre sizing or for radical curing.

## Patentansprüche

1. Ein tiefes eutektisches Lösungsmittel, umfassend:
- mindestens eine Carbonsäure, die mindestens zwei funktionelle Carbonsäuregruppen umfasst und eine Anzahl von Kohlenstoffatomen im Bereich von 4 bis 10 aufweist;
- mindestens einen Alkohol, der zwei oder drei funktionelle alkoholische Gruppen umfasst und der aus der Gruppe ausgewählt ist, bestehend aus:
(i) Alkohole mit einer Anzahl von Kohlenstoffatomen im Bereich von 2 bis 12 Kohlenstoffatomen,
(ii) Polyethylenglykol und
(iii) Polypropylenglykol; und
- Wasser in einer Menge von 10 bis 50 Gew.-% des Gesamtgewichts des tiefen eutektischen Lösungsmittels.

2. Das tiefe eutektische Lösungsmittel nach Anspruch 1, wobei die mindestens eine Carbonsäure eine Anzahl von Kohlenstoffatomen im Bereich von 4 bis 6 aufweist.

3. Das tiefe eutektische Lösungsmittel nach Anspruch 1 oder 2, wobei die mindestens eine Carbonsäure zwei oder drei funktionelle Carbonsäuregruppen umfasst.

4. Das tiefe eutektische Lösungsmittel nach einem der Ansprüche 1 bis 3, wobei die mindestens eine Carbonsäure zwei oder drei funktionelle Carbonsäuregruppen aufweist, eine Anzahl von Kohlenstoffatomen im Bereich von 4 bis 6 hat und eine gesättigte oder ungesättigte aliphatische Carbonsäure oder eine ungesättigte cyclische Carbonsäure ist, die ferner mindestens eine funktionelle Ethergruppe umfasst.

5. Das tiefe eutektische Lösungsmittel nach einem der Ansprüche 1 bis 4, wobei die mindestens eine Carbonsäure aus der Gruppe ausgewählt ist, die aus Bernsteinsäure, Maleinsäure, Fumarsäure, Glutarsäure, Adipinsäure, Zitronensäure, Akonitsäure, Dehydromucinsäure und Pimelinsäure besteht.

6. Das tiefe eutektische Lösungsmittel nach einem der Ansprüche 1 bis 5, wobei die mindestens eine Carbonsäure einen biobasierten Gesamtcarbonsäuregehalt von mehr als 25 Gew.-% aufweist.

7. Das tiefe eutektische Lösungsmittel nach einem der Ansprüche 1 bis 6, wobei der mindestens eine Alkohol aus der Gruppe ausgewählt ist, bestehend aus Alkoholen mit einer Anzahl von Kohlenstoffatomen im Bereich von 2 bis 6 Kohlenstoffatomen, Polyethylenglykol und Polypropylenglykol.

8. Das tiefe eutektische Lösungsmittel nach einem der Ansprüche 1 bis 7, wobei der mindestens eine Alkohol aus der Gruppe ausgewählt ist, bestehend aus 1,2-Ethandiol, 1,3-Propandiol, 1,2,3-Propantriol, 1,4-Butandiol, 2,3-Butandiol, 1,4-Pentandiol, Triethanolamin, Polyethylenglykol und Polypropylenglykol.

9. Das tiefe eutektische Lösungsmittel nach einem der Ansprüche 1 bis 8, wobei der mindestens eine Alkohol einen biobasierten Gesamtalkoholgehalt von mehr als 25 Gew.-% aufweist.

10. Das tiefe eutektische Lösungsmittel nach einem der Ansprüche 1 bis 9, wobei das Molverhältnis von Carbonsäure(n) zu Alkohol(en) im Bereich von 0,521 bis 2:1 liegt.

11. Verwendung eines tiefen eutektischen Lösungsmittels nach einem der Ansprüche 1 bis 10 als Lösungsmittel zum Solubilisieren von mindestens 40 Gew.-% Lignin aus einem Ligninmaterial.

12. Verfahren zur Herstellung eines Lignin-Prepolymers, umfassend:
a) Inkontaktbringen eines Ligninmaterials mit einem tiefen eutektischen Lösungsmittel nach einem der Ansprüche 1 bis 10;
b) Erhitzen der Mischung auf eine Temperatur im Bereich von 80 °C bis 160°C, um ein Lignin-Prepolymer herzustellen.

13. Lignin-Prepolymer, erhältlich durch das Verfahren nach Anspruch 12, das ein biobasiertes Lignin-Prepolymer mit einem biobasierten Gehalt von mehr als 25 Gew.-% ist.

14. Verwendung eines durch das Verfahren nach Anspruch 12 erhältlichen Lignin-Prepolymers zur Herstellung von Folien, Beschichtungen, Isolierschäumen, Klebstoffen, Bindemitteln, Verbundwerkstoffen oder zur Faserbeschichtung oder zur radikalischen Härtung.

## Revendications

1. Solvant eutectique profond comprenant :
- au moins un acide carboxylique qui comprend au moins deux groupes fonctionnels acide carboxylique et qui a un nombre d'atomes de carbone situé dans la plage allant de 4 à 10 ;
- au moins un alcool qui comprend deux ou trois groupes fonctionnels alcool et qui est choisi dans l'ensemble constitué par :
(i) les alcools ayant un nombre d'atomes de carbone situé dans la plage allant de 2 à 12 atomes de carbone,
(ii) le polyéthylèneglycol et
(iii) le polypropylèneglycol ; et
- de l'eau en une quantité de 10 à 50 % en poids par rapport au poids total du solvant eutectique profond.

2. Solvant eutectique profond selon la revendication 1, dans lequel l'au moins un acide carboxylique a un nombre d'atomes de carbone situé dans la plage allant de 4 à 6.

3. Solvant eutectique profond selon la revendication 1 ou 2, dans lequel l'au moins un acide carboxylique comprend deux ou trois groupes fonctionnels carboxyliques.

4. Solvant eutectique profond selon l'une quelconque des revendications 1 à 3, dans lequel l'au moins un acide carboxylique comprend deux ou trois groupes fonctionnels acide carboxylique, a un nombre d'atomes de carbone situé dans la plage allant de 4 à 6, et est un acide carboxylique aliphatique saturé ou insaturé, ou un acide carboxylique cyclique insaturé comprenant en outre au moins un groupe fonctionnel éther.

5. Solvant eutectique profond selon l'une quelconque des revendications 1 à 4, dans lequel l'au moins un acide carboxylique est choisi dans l'ensemble constitué par l'acide succinique, l'acide maléique, l'acide fumarique, l'acide glutarique, l'acide adipique, l'acide citrique, l'acide aconitique, l'acide déshydromucique et l'acide pimélique.

6. Solvant eutectique profond selon l'une quelconque des revendications 1 à 5, dans lequel l'au moins un acide carboxylique a une teneur totale en acide carboxylique d'origine biologique supérieure à 25 % en poids.

7. Solvant eutectique profond selon l'une quelconque des revendications 1 à 6, dans lequel l'au moins un alcool est choisi dans l'ensemble constitué par les alcools ayant un nombre d'atomes de carbone situé dans la plage allant de 2 à 6 atomes de carbone, le polyéthylèneglycol et le polypropylèneglycol.

8. Solvant eutectique profond selon l'une quelconque des revendications 1 à 7, dans lequel l'au moins un alcool est choisi dans l'ensemble constitué par le 1,2-éthanediol, le 1,3-propanediol, le 1,2,3-propanetriol, le 1,4-butanediol, le 2,3-butanediol, le 1,4-pentanediol, la triéthanolamine, le polyéthylèneglycol et le polypropylèneglycol.

9. Solvant eutectique profond selon l'une quelconque des revendications 1 à 8, dans lequel l'au moins un alcool a une teneur totale en alcool d'origine biologique supérieure à 25 % en poids.

10. Solvant eutectique profond selon l'une quelconque des revendications 1 à 9, dans lequel le rapport molaire du ou des acides carboxyliques à l'alcool ou aux alcools est situé dans la plage allant de 0,5/1 à 2/1.

11. Utilisation d'un solvant eutectique profond selon l'une quelconque des revendications 1 à 10 en tant que solvant pour solubiliser au moins 40 % en poids de lignine à partir d'un matériau de lignine.

12. Procédé pour préparer un prépolymère de lignine, comprenant :
a) la mise en contact d'un matériau de lignine avec un solvant eutectique profond selon l'une quelconque des revendications 1 à 10 ;
b) le chauffage dudit mélange jusqu'à une température située dans la plage allant de 80 °C à 160 °C pour produire un prépolymère de lignine.

13. Prépolymère de lignine pouvant être obtenu par le procédé selon la revendication 12, qui est un prépolymère de lignine d'origine biologique ayant une teneur en composants d'origine biologique supérieure à 25 % en poids.

14. Utilisation d'un prépolymère de lignine pouvant être obtenu par le procédé selon la revendication 12 pour produire des films, des revêtements, des mousses isolantes, des adhésifs, des liants, des composites, ou pour un encollage de fibres ou pour un durcissement radicalaire.
